# EUROPÄISCHE PATENTANMELDUNG

(11) **EP 3 719 870 A1**
(43) Veröffentlichungstag der Anmeldung: **07.10.2020**
(21) Anmeldenummer: 20162656.1
(22) Anmeldetag: 12.03.2020
(51) Int. Cl.: H01M 2/16, H01M 4/06, H01M 4/08, H01M 4/38, H01M 4/40, H01M 4/583, H01M 4/66, H01M 6/14, H01M 6/38, H01M 6/46, H01M 6/32

(54) **AKTIVIERBARE BATTERIE**

(30) Priorität: 05.04.2019 DE 102019002504
(71) Anmelder: Diehl & Eagle Picher GmbH, 90552 Röthenbach (DE)
(72) Erfinder: Hein, Roland, 90453 Nürnberg (DE)
(74) Vertreter: Diehl Patentabteilung

(57) **Zusammenfassung**

Die Erfindung betrifft eine Aktivierbare Batterie (10) mit mindestens einer Kathode (26), mindestens einer Anode (22), mindestens einer zwischen der Anode (22) und der Kathode (26) angeordneten und mit der Anode (22) und der Kathode (26) in Kontakt stehenden saugfähigen Separatorschicht (24) und einem davon separierten flüssigen Elektrolyten (17), der in einer Vorrichtung bereitgestellt wird, welche den Elektrolyten (17) zur Aktivierung der Batterie so freisetzt, dass er mit der Separatorschicht (24) in Kontakt kommt und diese zumindest zu einem solchen Teil durchdringt, dass der Elektrolyt (17) die Anode (22) und die Kathode (26) elektrisch leitend miteinander verbindet, wobei die Anode (22) aus Lithium oder einer Lithium enthaltenden Legierung besteht und die Kathode (26) elementaren Kohlenstoff umfasst, wobei die Kathode (26) aus einer Kohlenstoffnanoröhren umfassenden oder aus einer aus Kohlenstoffnanoröhren bestehenden Folie besteht.

## Beschreibung

Die Erfindung betrifft eine aktivierbare elektrische Batterie mit mindestens einer Kathode, mindestens einer Anode, mindestens einer zwischen der Anode und Kathode angeordneten und mit der Anode und der Kathode in Kontakt stehenden saugfähigen Separatorschicht und einem davon separierten flüssigen Elektrolyten. Der Elektrolyt wird dabei in einer Vorrichtung bereitgestellt, welche den Elektrolyten zur Aktivierung der Batterie so freisetzt, dass er mit der Separatorschicht in Kontakt kommt und diese zumindest zu einem solchen Teil durchdringt, dass der Elektrolyt die Anode und die Kathode elektrisch leitend miteinander verbindet. Dadurch entsteht eine elektrochemische Zelle. Die Anode besteht aus Lithium oder aus einer Lithium enthaltenden Legierung, d. h. einer Legierung, die Lithium-Ionen freisetzen kann. Die Kathode umfasst elementaren Kohlenstoff.

Eine derartige aktivierbare Batterie ist als aktivierbare Lithium-Thionylchlorid-Batterie, insbesondere als Batterie für einen elektronischen Munitionszünder, bekannt. Bei einer solchen Batterie wird SOCl₂ als flüssiger Elektrolyt während einer Lagerung in einem geschlossenen Behälter aufbewahrt. Dadurch sind die Elektroden nicht mit dem Elektrolyten in Kontakt, so dass es dadurch weder zu einer Entladung, noch zu einem chemischen Abbauprozess kommen kann. Dadurch ist gewährleistet, dass die Batterie auch nach einer langen Lagerzeit zuverlässig Strom liefern kann. Zum Aktivieren der Batterie wird der geschlossene Behälter geöffnet oder zerstört, so dass der Elektrolyt freigesetzt wird und sich in der Separatorschicht zwischen der Kathode und der Anode verteilt. Dadurch entsteht eine die Kathode, die Separatorschicht und die Anode umfassende elektrochemische Zelle, die auch galvanische Zelle oder Elektrodenzelle genannt wird. Ist die Batterie in einem Geschoss zur Stromversorgung eines Zünders des Geschosses enthalten, unterstützen beim Abschuss auftretende Beschleunigungskräfte und eine gegebenenfalls erfolgende Rotation eine Verteilung des Elektrolyten. Die Separatorschicht verhindert einen direkten elektrischen Kontakt zwischen der Kathode und der Anode, so dass eine elektrisch leitende Verbindung nur durch den Elektrolyten zu Stande kommen kann.

Der elementare Kohlenstoff der Kathode liegt dabei üblicherweise ursprünglich pulverförmig vor. Zur Herstellung der Kathode wird das Kohlenstoffpulver im Allgemeinen mit einem Bindemittel versehen und entweder in einem Nassschichtverfahren auf eine den Strom ableitenden Metallfolie aufgebracht oder in eine Form gepresst. In beiden Fällen erfolgt anschließend eine Trocknung. Es ist auch möglich, dass der getrocknete mit dem Bindemittel versehene elementare Kohlenstoff gesintert, vermahlen und anschließend zu einer Scheibe verpresst wird. In jedem Fall ist das Herstellen der elementaren Kohlenstoff umfassenden Elektrode verhältnismäßig aufwendig. Außerdem benötigt eine Batterie mit einer derartigen elementaren Kohlenstoff umfassenden Kathode eine gewisse Zeit, um nach Kontakt mit dem Elektrolyten in einer Elektrodenzelle eine gewünschte Spannung und Strom einer gewünschten Stärke bereitzustellen.

Aus der US 2011/0163274 A1 ist eine Elektrodenzusammensetzung für eine negative Elektrode einer sekundären Lithium-Ionen-Batterie mit einem nicht-wässrigen Elektrolyten bekannt. Die Elektrodenzusammensetzung enthält als leitfähiges Additiv zumindest eine Kohlenstoffnanofasern und Kohlenstoffnanoröhren enthaltende Mischung. Weiterhin enthält die Elektrodenzusammensetzung ein aktives Element, welches elektrochemische Aktivität aufweist, und ein Bindemittel.

Aus Nomura et al., Sci Rep. 2017, Apr 5;7:45596 ist die Verwendung einer flexiblen Folie aus Kohlenstoffnanoröhren als Elektrode für einen Lithium-Luft-Akkumulator bekannt.

Aus Kim, Sang Woo & Cho, Kuk. (2015), Journal of Electrochemical Science and Technology, 6(1), 10-15 ist es bekannt, auf Kohlenstoffnanoröhren basierende Materialien als flexible Stromabnehmer in Lithium-Ionen-Batterien einzusetzen.

Aufgabe der vorliegenden Erfindung ist es, eine alternative aktivierbare Batterie bereitzustellen, welche verhältnismäßig einfach herzustellen ist und bei welcher die Zeit zwischen dem Kontakt des Elektrolyten mit den Elektroden und der Bereitstellung einer gewünschten Spannung und von Strom einer gewünschten Stärke verhältnismäßig kurz ist. Weiterhin sollen ein elektronischer Zünder und ein Verfahren zur Herstellung der aktivierbaren Batterie sowie eine Verwendung angegeben werden.

Die Aufgabe wird durch die Merkmale der Patentansprüche 1, 11, 12 und 16 gelöst. Zweckmäßige Ausgestaltungen ergeben sich aus den Merkmalen der Patentansprüche 2 bis 10 sowie 13 bis 15.

Erfindungsgemäß ist eine aktivierbare Batterie mit mindestens einer Kathode, mindestens einer Anode, mindestens einer zwischen der Anode und der Kathode angeordneten und mit der Anode und der Kathode in Kontakt stehenden saugfähigen Separatorschicht und einem davon separierten flüssigen Elektrolyten vorgesehen. Der Elektrolyt wird dabei in einer Vorrichtung bereitgestellt, welche den Elektrolyten zur Aktivierung der Batterie so freisetzt, dass er mit der Separatorschicht in Kontakt kommt und diese zumindest zu einem solchen Teil durchdringt, dass der Elektrolyt die Anode und die Kathode elektrisch leitend miteinander verbindet. Dabei besteht die Anode aus Lithium oder einer Lithium enthaltenden Legierung. Die Kathode umfasst elementaren Kohlenstoff. Die Kathode besteht dabei aus einer Kohlenstoffnanoröhren umfassenden trägerfreien Folie oder aus einer aus Kohlenstoffnanoröhren bestehenden Folie. Unter einer trägerfreien Folie wird dabei eine Folie verstanden, bei der eine Kohlenstoffnanoröhren umfassende Zusammensetzung nicht auf einem keine Kohlenstoffnanoröhren umfassenden Träger, wie beispielsweise einer Metallfolie, aufgebracht ist. Die trägerfreie Folie weist demnach kein Kohlenstoffnanoröhren-freies Trägermaterial auf.

Eine solche Folie wird üblicherweise als CNT-Folie bezeichnet. CNT ist die gebräuchliche Abkürzung für "Carbon Nanotubes", also Kohlenstoffnanoröhren. CNT-Folien sind handelsüblich. Sie werden beispielsweise als Folien zur Herstellung von elektrischen Abschirmungen oder zur Erhöhung der Festigkeit von kohlenstofffaserverstärktem Kunststoff verwendet. Die Folie hat den Vorteil einer guten kommerziellen Verfügbarkeit und dass sie einfach, beispielsweise mittels Laserschneiden oder Stanzen, zu verarbeiten ist. Das aufwändige Herstellen der bisher verwendeten elementaren Kohlenstoff enthaltenden Kathoden entfällt. Durch das Schneiden mittels eines Lasers können Elektroden in beliebiger Form ausgeschnitten werden. Weiterhin ermöglicht die Verformbarkeit der aus der Folie hergestellten Kathode den Bau flexibler und den Bau beliebig geformter Batterien. Außerdem kann die Kathode dadurch mit einer besonders großen Oberfläche und dadurch einer großen Kontaktfläche zum Elektrolyten auf verhältnismäßig kleinem Raum bereitgestellt werden. Dazu kann die Folie beispielsweise mäanderförmig oder in plissierter Form in der Elektrodenzelle bereitgestellt werden. Mit den bisher üblichen elementaren Kohlenstoff enthaltenden Kathoden wäre dies nicht oder nur mit hohem Aufwand möglich. Sie würden bei einer Verformung brechen.

Bei einer Ausgestaltung der erfindungsgemäßen aktivierbaren Batterie sind die Kohlenstoffnanoröhren nur durch Wechselwirkungen zwischen den Kohlenstoffnanoröhren miteinander verbunden. Ein Bindemittel ist bei dieser Ausgestaltung zwischen den Kohlenstoffnanoröhren nicht vorhanden. Die Folie kann beispielsweise in Form eines Vlieses vorliegen. Eine solche Folie wird beispielsweise von der Firma Tortech Nano Fibers Ltd., Israel vertrieben. Durch das Fehlen des Bindemittels weist diese Folie einen besonders niedrigen Innenwiderstand auf. Dadurch wird eine hohe Batterieleistung der aktivierbaren Batterie erreicht. Weiterhin wird durch den geringen Innenwiderstand die Batterieleistung besonders schnell nach der elektrisch leitenden Verbindung der Anode und der Kathode durch den Elektrolyten erreicht. Es kommt zu einem besonders schnellen Spannungsaufbau und die Batterie ist durch den geringen Innenwiderstand besonders schnell nach ihrer Aktivierung zur Energieabgabe fähig.

Bei einer weiteren Ausgestaltung besteht die Folie zu über 80 Gew.-%, insbesondere über 90 Gew.-%, insbesondere über 95 Gew.-%, insbesondere über 98 Gew.-%, insbesondere über 99 Gew.-%, insbesondere ausschließlich aus den Kohlenstoffnanoröhren. Dies ermöglicht einen extrem niedrigen Innenwiderstand mit den oben bereits genannten Vorteilen eines schnellen Spannungsaufbaus und der Möglichkeit einer schnellen Energieabgabe nach Aktivierung der Batterie. Dies ist insbesondere bei aktivierbaren Batterien für die elektrische Versorgung von Zündern und/oder Steuereinrichtungen von Geschossen von Bedeutung, bei denen die Aktivierung der Batterie üblicherweise erst mit dem Abschuss des Geschosses erfolgt und bei denen die elektrische Energie möglichst unmittelbar nach dem Abschuss zur Verfügung stehen soll.

Die Anode kann in Form einer weiteren Folie ausgebildet sein. Dies ermöglicht eine einfache Herstellung von jeweils von der Kathode, der Separatorschicht und der Anode gebildeten Elektrodenzellen, indem die Folie, die Separatorschicht und die weitere Folie übereinander angeordnet werden. Dazu können die Folie, die Separatorschicht und die weitere Folie jeweils von einer Rolle abgerollt, zusammengefügt und dann geschnitten oder gestanzt werden. Dadurch, dass beide Elektroden als Folien ausgebildet sind, sind die Elektroden sehr einfach in eine gewünschte Form zu bringen. Die übereinander angeordneten Elektroden mit dazwischen angeordneter Separatorschicht können beispielsweise, gegebenenfalls mit einer dazwischen angeordneten Isolierungsfolie, aufgerollt werden, um verhältnismäßig große Elektrodenflächen in verhältnismäßig kleinem Raum unterzubringen.

Bei einer Ausgestaltung weist die Batterie eine Mehrzahl von jeweils von der Kathode, der Separatorschicht und der Anode gebildeten Elektrodenzellen auf, wobei eine Mehrzahl der Elektrodenzellen zu einem Stapel zusammengesetzt ist. Dabei können bei mindestens zwei der Elektrodenzellen jeweils die Kathode einer der Elektrodenzellen mit der Kathode einer anderen der Elektrodenzellen elektrisch leitend verbunden sein und jeweils die Anode einer der Elektrodenzellen mit der Anode einer anderen der Elektrodenzellen elektrisch leitend verbunden sein. Die einzelnen Elektrodenzellen sind dabei parallel geschaltet. Dadurch erhöht sich die Kapazität der Batterie während deren Spannung konstant bleibt. Die Kathode und die Anode benachbarter Elektrodenzellen können jeweils durch einen, beispielsweise in Form einer Kunststofffolie vorliegenden, Isolator elektrisch voneinander isoliert sein.

Es ist auch möglich, dass bei mindestens zwei der Elektrodenzellen jeweils die Kathode einer der Elektrodenzellen mit der Anode einer anderen der Elektrodenzellen elektrisch leitend verbunden ist. Die einzelnen Elektrodenzellen sind dabei in Reihe geschaltet. Dabei sind jeweils eine Anode und jeweils eine Kathode der in Reihe geschalteten Elektrodenzellen nicht mit einer Kathode bzw. Anode einer anderen der Elektrodenzellen elektrisch leitend verbunden. Diese Anode und diese Kathode dienen jeweils einer Stromabnahme der in Reihe geschalteten Elektrodenzellen. Durch die Reihenschaltung der Elektrodenzellen erhöht sich die Spannung der Batterie während deren Kapazität konstant bleibt. Es ist auch eine gemischte Form möglich, bei der ein Teil der Elektrodenzellen parallel geschaltet ist, wobei dann zumindest zwei der parallel geschalteten Elektrodenzellen in Reihe geschaltet sind.

Der Elektrolyt kann Thionylchlorid (SOCl₂) und ein Leitsalz umfassen oder aus Thionylchlorid (SOCl₂) und einem Leitsalz bestehen. Das Thionylchlorid kann dabei gleichzeitig als Lösungsmittel dienen. Bei dem Leitsalz kann es sich um Lithiumtetrachloroaluminat (LiAlCl₄) handeln.

Die Separatorschicht kann aus einem Vlies bestehen oder ein Vlies umfassen. Es ist möglich, dass das Vlies dabei aus Glasfasern besteht oder Glasfasern umfasst.

Die Erfindung betrifft weiterhin einen elektronischen Zünder, wobei der Zünder durch eine erfindungsgemäße aktivierbare Batterie mit Strom versorgt wird.

Weiterhin betrifft die Erfindung ein Verfahren zur Herstellung einer erfindungsgemäßen aktivierbaren Batterie, wobei eine Kohlenstoffnanoröhren umfassende trägerfreie Folie oder eine aus Kohlenstoffnanoröhren bestehende Folie als Kathode mit einer saugfähigen Separatorschicht zur Aufnahme eines flüssigen Elektrolyten in Kontakt gebracht wird. Die Separatorschicht wiederum wird mit einer eine Anode aus Lithium oder einer Lithium enthaltenden Legierung in Kontakt gebracht wird. Der Elektrolyt wird separat in einer Vorrichtung bereitgestellt, welche den Elektrolyten zur Aktivierung der Batterie so freisetzen kann, dass er mit der Separatorschicht in Kontakt kommt und diese zumindest zu einem solchen Teil durchdringt, dass durch den Elektrolyten die Anode und die Kathode elektrisch leitend miteinander verbunden werden. Die Kathode wird dabei aus der Folie ausgestanzt oder mittels eines Laserstrahls ausgeschnitten oder von der Folie, insbesondere mittels eines Laserstrahls oder einer Schneide, abgeschnitten. Das Verfahren ermöglicht durch die sehr einfache Möglichkeit der Herstellung der Kathode eine deutlich einfachere und damit kostengünstigere Herstellung der erfindungsgemäßen aktivierbaren Batterie.

Besonders effizient ist die Herstellung der erfindungsgemäßen Batterie, wenn die die Kathode bildende Folie mit der Separatorschicht in Kontakt gebracht wird und die Separatorschicht mit einer die Anode bildenden weiteren Folie aus dem Lithium oder der Lithium enthaltenden Legierung in Kontakt gebracht wird und aus oder von der so übereinander angeordneten Folie, Separatorschicht und weiteren Folie zusammen durch einen einzigen Stanzvorgang oder Schneidvorgang eine die Kathode, die Separatorschicht und die Anode umfassende Elektrodenzellen ausgestanzt oder abgeschnitten wird. Mithilfe eines solchen Verfahrens kann eine große Zahl von Elektrodenzellen sehr schnell und kostengünstig hergestellt werden.

In einem automatisierten Prozess können beispielsweise die Folie, die Separatorschicht und die weitere Folie jeweils von einer Rolle abgerollt und dann zusammengeführt werden. Von dem dadurch gebildeten sandwichartigen Verbund können die Elektrodenzellen dann einfach ausgestanzt oder abgeschnitten werden. Es ist auch möglich, dass mit einem Stanzvorgang mehrere Elektrodenzellen gleichzeitig ausgestanzt werden.

Eine Mehrzahl der Elektrodenzellen kann zu einem Stapel zusammengesetzt werden. Dabei kann bei mindestens zwei der Elektrodenzellen jeweils die Kathode einer der Elektrodenzellen mit der Kathode einer anderen der Elektrodenzellen elektrisch leitend verbunden werden und jeweils die Anode einer der Elektrodenzellen mit der Anode einer anderen der Elektrodenzellen elektrisch leitend verbunden werden. Die Elektrodenzellen werden in einem solchen Fall parallel geschaltet. Die Kathode und die Anode benachbarter Elektrodenzellen können jeweils durch einen Isolator, beispielsweise in Form einer Kunststofffolie, elektrisch voneinander isoliert werden. Es ist auch möglich, dass bei mindestens zwei der Elektrodenzellen jeweils die Kathode einer der Elektrodenzellen mit der Anode einer anderen der Elektrodenzellen elektrisch leitend verbunden wird. Dies kann beispielsweise dadurch erfolgen, dass die Elektrodenzellen einfach jeweils in derselben Orientierung übereinander gestapelt werden, so dass ein direkter elektrischer Kontakt zwischen einer der Anoden und der benachbarten Kathode entsteht. Die Elektrodenzellen werden in einem solchen Fall in Reihe geschaltet.

Bei einer Parallelschaltung zweier Elektrodenzellen ist es nicht unbedingt erforderlich, dass dazu die Elektrodenzellen elektrisch voneinander isoliert werden. Es ist auch möglich, dass eine Anode einer der Elektrodenzellen direkt auf eine Anode einer anderen der Elektrodenzellen gestapelt wird, so dass dadurch ein direkter elektrischer Kontakt zwischen den Anoden der beiden Elektrodenzellen entsteht. Es ist ebenso möglich, dass die Kathode einer der Elektrodenzellen direkt auf die Kathode einer anderen der Elektrodenzellen gestapelt wird, so dass dadurch ein direkter elektrischer Kontakt zwischen den Kathoden der beiden Elektrodenzellen entsteht. In den beiden genannten Fällen ist es auch möglich, dass die jeweils direkt miteinander in Kontakt stehenden Elektroden jeweils durch eine einzige Elektrode ersetzt werden.

Die Erfindung betrifft weiterhin die Verwendung einer Kohlenstoffnanoröhren umfassenden trägerfreien Folie oder einer aus Kohlenstoffnanoröhren bestehenden Folie als Elektrode in einer Lithium-Ionen-Batterie. Bei der Lithium-Ionen-Batterie kann es sich um eine primäre oder eine sekundäre Lithium-Ionen-Batterie handeln.

Nachfolgend wird die Erfindung anhand eines Ausführungsbeispiels näher erläutert. Es zeigen:
- Fig. 1: eine erfindungsgemäße aktivierbare Batterie,
- Fig. 2: einen Elektrodenzellenstapel der aktivierbaren Batterie mit schematischer Darstellung einer Elektrodenzelle und
- Fig. 3: einen Elektrodenzellenstapel der aktivierbaren Batterie mit schematischer Darstellung eines Verfahrens zur Herstellung der Elektrodenzellen.

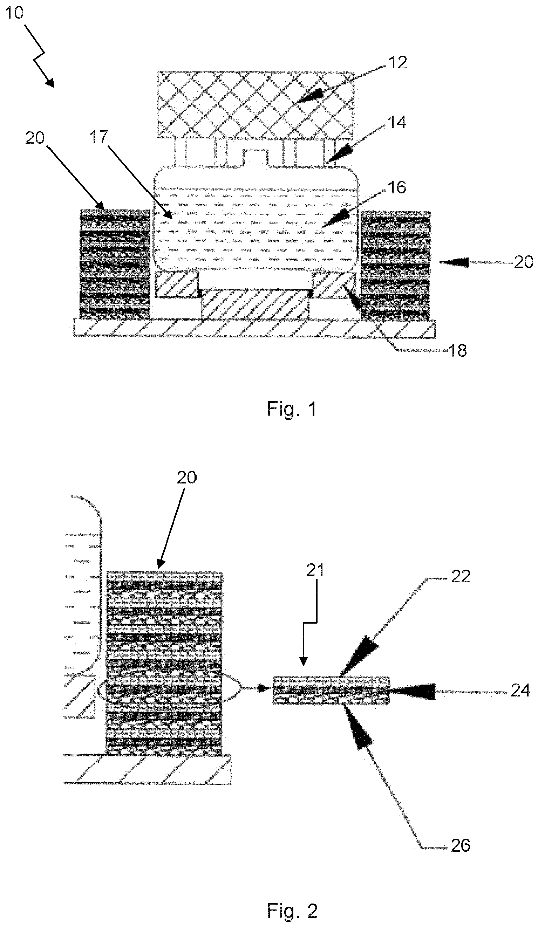

Fig. 1 zeigt eine schematische Darstellung einer aktivierbaren Batterie 10 zur Stromversorgung eines Zünders eines Geschosses. Bei Abschuss des Geschosses wird die Auslöseeinheit 18 aktiviert. Diese beschädigt dadurch den Elektrolytbehälter 16, so dass der darin enthaltene Elektrolyt 17 austreten kann. Durch die Beschleunigung beim Abschuss des Geschosses presst die Zusatzmasse 12 über das Dämpfungselement 14 den Elektrolytbehälter 16 zusammen. Dadurch wird der Elektrolyt 17 zumindest weitgehend aus dem Elektrolytbehälter 16 herausgedrückt. Der Elektrolyt 17 kommt, dadurch mit den jeweiligen Separatorschichten der Elektrodenzellen 21 des Elektrodenzellenstapels 20 in Kontakt. Die Separatorschichten werden von dem Elektrolyten 17 durchdrungen bzw. vom Elektrolyten 17 getränkt. Durch den Elektrolyten werden die Anode 22 und die Katode 26 elektrisch leitend miteinander verbunden.

Beim Entladen der aktivierten Batterie 10 wird Lithium anodisch unter Elektronenabgabe zu Lithium-Ionen (Li+) oxidiert, die wiederum zu Lithiumchlorid reagieren. In mehreren Reaktionsschritten wird Thionylchlorid kathodisch zu elementarem Schwefel reduziert. Dabei entsteht auch Schwefeldioxid. Die Gesamtgleichung kann wie folgt formuliert werden:

4Li + 2SOCl₂ → 4LiCl + S + SO₂

Die kathodisch entstandenen Reaktionsprodukte lagern sich in Zwischenräumen und Kanälen der Kohlenstoff-Kathode ab. Schwefeldioxid löst sich zum Teil in dem Elektrolyten 17. Anodisch entstandenes Lithiumchlorid lagert sich kristallin an der Anode 22 ab.

Die Elektrodenzellen 21 sind in dem hier dargestellten Elektrodenzellenstapel 20 direkt ohne Isolierung dazwischen übereinander gestapelt, so dass ein direkter elektrischer Kontakt zwischen der Anode 22 einer der Elektrodenzellen 21 mit der Kathode 26 der benachbarten Elektrodenzelle 21 besteht und die Elektrodenzellen 21 dadurch in Reihe geschaltet sind. Die hier dargestellten sieben übereinandergestapelten Elektrodenzellen 21 liefern in dem Elektrodenzellenstapel 20 dadurch die siebenfache Spannung einer der Elektrodenzellen 21.

Fig. 2 zeigt schematisch den Aufbau einer der Elektrodenzellen 21 aus der Anode 22, der Separatorschicht 24 und der Katode 26.

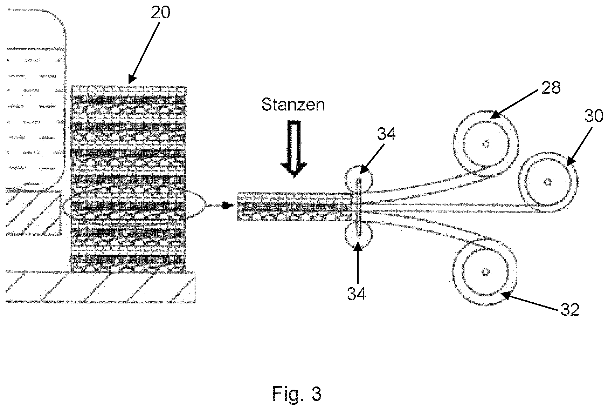

Fig. 3 zeigt schematisch ein Verfahren zur Herstellung der Elektrodenzellen 21. Dabei werden die aufgerollte Lithiumfolie 28, die aufgerollte Separatorschicht 30 und die aufgerollte CNT-Folie 32 jeweils von einer Rolle abgerollt und von den beiden Presswalzen 34 zu einem Schichtenverbund zusammengepresst. Daraus werden die Elektrodenzellen 21 durch hier im Einzelnen nicht dargestelltes Stanzen herausgestanzt. Die so gewonnenen Elektrodenzellen 21 können dann zu dem Elektrodenzellenstapel 20 zusammengefügt werden.

### Bezugszeichenliste

- 10: Aktivierbare Batterie
- 12: Zusatzmasse
- 14: Dämpfungselement
- 16: Elektrolytbehälter
- 17: Elektrolyt
- 18: Auslöseeinheit
- 20: Elektrodenzellenstapel
- 21: Elektrodenzelle
- 22: Anode
- 24: Separatorschicht
- 26: Kathode
- 28: aufgerollte Lithiumfolie
- 30: aufgerollte Separatorschicht
- 32: aufgerollte CNT-Folie
- 34: Presswalze

## Patentansprüche

1. Aktivierbare Batterie (10) mit mindestens einer Kathode (26), mindestens einer Anode (22), mindestens einer zwischen der Anode (22) und der Kathode (26) angeordneten und mit der Anode (22) und der Kathode (26) in Kontakt stehenden saugfähigen Separatorschicht (24) und einem davon separierten flüssigen Elektrolyten (17), der in einer Vorrichtung bereitgestellt wird, welche den Elektrolyten (17) zur Aktivierung der Batterie so freisetzt, dass er mit der Separatorschicht (24) in Kontakt kommt und diese zumindest zu einem solchen Teil durchdringt, dass der Elektrolyt (17) die Anode (22) und die Kathode (26) elektrisch leitend miteinander verbindet, wobei die Anode (22) aus Lithium oder einer Lithium enthaltenden Legierung besteht und die Kathode (26) elementaren Kohlenstoff umfasst,
**dadurch gekennzeichnet,**
**dass** die Kathode (26) aus einer Kohlenstoffnanoröhren umfassenden trägerfreien Folie oder aus einer aus Kohlenstoffnanoröhren bestehenden Folie besteht.

2. Aktivierbare Batterie (10) nach Anspruch 1,
**dadurch gekennzeichnet,**
**dass** die Kohlenstoffnanoröhren nur durch Wechselwirkungen zwischen den Kohlenstoffnanoröhren miteinander verbunden sind.

3. Aktivierbare Batterie (10) nach Anspruch 1 oder 2,
**dadurch gekennzeichnet,**
**dass** die Folie zu über 80 Gew.-%, insbesondere zu über 90 Gew.-%, insbesondere zu über 95 Gew.-%, insbesondere zu über 98 Gew.-%, insbesondere zu über 99 Gew.-%, insbesondere ausschließlich aus den Kohlenstoffnanoröhren besteht.

4. Aktivierbare Batterie (10) nach einem der vorhergehenden Ansprüche,
**dadurch gekennzeichnet,**
**dass** die Anode (22) in Form einer weiteren Folie ausgebildet ist.

5. Aktivierbare Batterie (10) nach einem der vorhergehenden Ansprüche,
**dadurch gekennzeichnet,**
**dass** die Batterie eine Mehrzahl von jeweils von der Kathode (26), der Separatorschicht (24) und der Anode (22) gebildeten Elektrodenzellen (21) aufweist, wobei eine Mehrzahl der Elektrodenzellen (21) zu einem Stapel zusammengesetzt ist, wobei bei mindestens zwei der Elektrodenzellen (21) jeweils die Kathode (26) einer der Elektrodenzellen (21) mit der Kathode (26) einer anderen der Elektrodenzellen (21) elektrisch leitend verbunden ist und jeweils die Anode (22) einer der Elektrodenzellen (21) mit der Anode (22) einer anderen der Elektrodenzellen (21) elektrisch leitend verbunden ist oder wobei bei mindestens zwei der Elektrodenzellen (21) jeweils die Kathode einer der Elektrodenzellen (21) mit der Anode (22) einer anderen der Elektrodenzellen (21) elektrisch leitend verbunden ist.

6. Aktivierbare Batterie (10) nach Anspruch 5,
wobei jeweils die Kathode (26) einer der Elektrodenzellen (21) mit der Kathode (26) einer anderen der Elektrodenzellen (21) elektrisch leitend verbunden ist und jeweils die Anode (22) einer der Elektrodenzellen (21) mit der Anode (22) einer anderen der Elektrodenzellen (21) elektrisch leitend verbunden ist und wobei die Kathode (26) und die Anode (22) benachbarter Elektrodenzellen jeweils durch einen Isolator elektrisch voneinander isoliert sind.

7. Aktivierbare Batterie (10) nach einem der vorhergehenden Ansprüche,
**dadurch gekennzeichnet,**
**dass** der Elektrolyt (17) Thionylchlorid (SOCl₂) und ein Leitsalz umfasst oder aus Thionylchlorid (SOCl₂) und einem Leitsalz besteht.

8. Aktivierbare Batterie (10) nach Anspruch 7,
**dadurch gekennzeichnet,**
**dass** das Leitsalz Lithiumtetrachloroaluminat (LiAlCl₄) ist.

9. Aktivierbare Batterie (10) nach einem der vorhergehenden Ansprüche,
**dadurch gekennzeichnet,**
**dass** die Separatorschicht (24) aus einem Vlies besteht oder ein Vlies umfasst.

10. Aktivierbare Batterie (10) nach Anspruch 9,
**dadurch gekennzeichnet,**
**dass** das Vlies aus Glasfasern besteht oder Glasfasern umfasst.

11. Elektronischer Zünder,
**dadurch gekennzeichnet,**
**dass** der Zünder durch eine aktivierbare Batterie (10) nach einem der vorhergehenden Ansprüche mit Strom versorgt wird.

12. Verfahren zur Herstellung einer gemäß einem der Ansprüche 1 bis 10 spezifizierten aktivierbaren Batterie (10),
**dadurch gekennzeichnet,**
**dass** eine Kohlenstoffnanoröhren umfassende trägerfreie Folie oder eine aus Kohlenstoffnanoröhren bestehende Folie als Kathode (26) mit einer saugfähigen Separatorschicht (24) zur Aufnahme eines flüssigen Elektrolyten (17) in Kontakt gebracht wird und die Separatorschicht (24) mit einer eine Anode (22) aus Lithium oder einer Lithium enthaltenden Legierung in Kontakt gebracht wird, wobei der Elektrolyt (17) separat in einer Vorrichtung bereitgestellt wird, welche den Elektrolyten (17) zur Aktivierung der Batterie so freisetzen kann, dass er mit der Separatorschicht (24) in Kontakt kommt und diese zumindest zu einem solchen Teil durchdringt, dass durch den Elektrolyten (17) die Anode (22) und die Kathode (26) elektrisch leitend miteinander verbunden werden, wobei die Kathode (26) aus der Folie ausgestanzt oder mittels eines Laserstrahls ausgeschnitten wird oder von der Folie abgeschnitten wird.

13. Verfahren nach Anspruch 12,
wobei die die Kathode (26) bildende Folie mit der Separatorschicht (24) in Kontakt gebracht wird und die Separatorschicht (24) mit einer die Anode (22) bildenden weiteren Folie aus dem Lithium oder der Lithium enthaltenden Legierung in Kontakt gebracht wird, wobei aus oder von der so übereinander angeordneten Folie, Separatorschicht (24) und weiteren Folie zusammen durch einen einzigen Stanzvorgang oder Schneidvorgang eine die Kathode (26), die Separatorschicht (24) und die Anode (22) umfassende Elektrodenzellen (21) ausgestanzt oder abgeschnitten wird.

14. Verfahren nach Anspruch 13,
wobei eine Mehrzahl der Elektrodenzellen (21) zu einem Stapel zusammengesetzt wird, wobei bei mindestens zwei der Elektrodenzellen (21) jeweils die Kathode (26) einer der Elektrodenzellen (21) mit der Kathode (26) einer anderen der Elektrodenzellen (21) elektrisch leitend verbunden wird und jeweils die Anode (22) einer der Elektrodenzellen (21) mit der Anode (22) einer anderen der Elektrodenzellen (21) elektrisch leitend verbunden wird oder wobei bei mindestens zwei der Elektrodenzellen (21) jeweils die Kathode (26) einer der Elektrodenzellen (21) mit der Anode (22) einer anderen der Elektrodenzellen (21) elektrisch leitend verbunden wird.

15. Verfahren nach Anspruch 14,
wobei bei mindestens zwei der Elektrodenzellen (21) jeweils die Kathode (26) einer der Elektrodenzellen (21) mit der Kathode (26) einer anderen der Elektrodenzellen (21) elektrisch leitend verbunden wird und jeweils die Anode (22) einer der Elektrodenzellen (21) mit der Anode (22) einer anderen der Elektrodenzellen (21) elektrisch leitend verbunden wird und wobei die Kathode (26) und die Anode (22) benachbarter Elektrodenzellen jeweils durch einen Isolator elektrisch voneinander isoliert werden.

16. Verwendung einer Kohlenstoffnanoröhren umfassenden trägerfreien Folie oder einer aus Kohlenstoffnanoröhren bestehenden Folie als Elektrode in einer Lithium-Ionen-Batterie.
